# EUROPEAN PATENT APPLICATION

(11) **EP 2 650 077 A1**
(43) Date of publication of application: **16.10.2013**
(21) Application number: 11846727.3
(22) Date of filing: 01.12.2011
(51) Int. Cl.: B23K 35/30, C04B 37/00, C04B 37/02, C22C 5/06, H01M 8/02, H01M 8/12

(54) **BRAZING MATERIAL FOR BONDING IN ATMOSPHERE, BONDED ARTICLE, AND CURRENT COLLECTOR MATERIAL**

(30) Priority: 09.12.2010 JP 2010274643
(71) Applicant: Nhk Spring Co., Ltd., Yokohama-shi, Kanagawa 236-0004 (JP)
(72) Inventor: YAMAUCHI, Yuichiro, Yokohama-shi Kanagawa 236-0004 (JP); SAITO, Shinji, Yokohama-shi Kanagawa 236-0004 (JP)
(74) Representative: Eisenführ, Speiser & Partner
(86) International application number: PCT/JP2011/078360
(87) International publication number: WO 2012/077733

(57) **Abstract**

A brazing alloy for bonding in air can be melted at a temperature below the melting point ofAg and can improve the high-temperature durability of the bonded article. The brazing alloy for bonding in air contains Ag, B, and Si, as essential components, in which the total of constituent elements except for Ag is set to more than 50% by volume and not more than 90% by volume, Si content in the constituent elements except for Ag is set to more than 22% by volume, and B content in the constituent elements except for Ag is set to more than 14% by volume. For example, as shown in Fig. 4, in a bonded layer 13 of a bonded specimen of the present invention, after holding at high temperature, no void 16 (Fig. 6) as observed in a bonded specimen after holding at high temperature of a Comparative Sample was observed, the brazing alloy was sufficiently melted, and superior gas sealing characteristics were maintained even after holding at high temperature for a long time.

## Description

### Technical Field

The present invention relates to a brazing alloy for bonding in air, to a bonded article, and to a current collecting material bonded with the brazing alloy. In particular, the present invention relates to a technique for reducing the melting point and for improving high-temperature durability of the brazing alloy for bonding in air.

### Background Art

Bonded articles formed of a metal member and a metal member, bonded articles formed of a ceramic member and a ceramic member, and bonded articles formed of a ceramic member and a metal member, may be obtained by brazing. Recently, requirements for improving accuracy, reliability, and function of products, have been increasing, and bonded articles formed of ceramics and metal are utilized in order to satisfy these requirements. In this regard, bonding methods for obtaining bonded articles have been actively researched.

As a method for bonding a ceramic member and a metal member, it is necessary to develop an air brazing technique, by which the production cost is decreased, and by which a preferable bonded article is obtained by heating at relatively low temperatures even in air.

As an air brazing technique, a flux brazing method, in which the brazing is performed in air, is generally used. In this method, flux is applied on to a surface of a base material, and the surface is bonded while the flux makes a reductive atmosphere and cuts off oxygen at the bonded portion, whereby a preferable bonded article is obtained. For example, in a case of using "BAg-8" of an Ag brazing alloy as a brazing alloy, a flux with a lower melting point than 780 °C of the melting point of the "BAg-8" is used so as to melt the flux before the brazing alloy melts. Thus, the bonding surface is activated, and the oxidation of the brazing alloy is prevented, whereby a preferable bonded article is obtained.

In the flux brazing method, the bonding is generally performed by local heating with a torch. Therefore, this method is effective for bonding points or lines, but is not suitable for bonding planes. In a case of bonding a ceramic member and a ceramic member and bonding a ceramic member and a metal member by this method, thermal stress is generated by the local heating, which may break the ceramic member. Accordingly, this method is also not suitable for forming a bonded article that has a ceramic member. Moreover, most fluxes themselves, or residues thereof, tend to corrode metals, and in this case, the residues of the flux must be removed in an additional step after the bonding.

Alternatively, as an air brazing technique which does not need flux, a reactive air brazing method may be used (for example, Patent Documents 1 and 2). According to the technique disclosed in Patent Document 1, a ceramic member and a heat-resistant metal member that forms an aluminum oxide layer in air, are used as base materials. The base materials are bonded in air by the reactive air brazing method using an Ag-Cu brazing alloy in which CuO is added to Ag. In this technique, the primary component of the brazing alloy is a noble metal component such as Ag, whereby flux is not necessary in the brazing, and the above-described problems due to the flux do not occur.

In the technique disclosed in Patent Documents 1 and 2, the bonding temperature must be higher than the melting point (approximately 961 °C) of Ag. Therefore, there is a possibility that the metal member of the base material will be heavily oxidized. In addition, in the case of bonding a metal member and a ceramic member, greater thermal stress is generated due to the difference in thermal expansion coefficient therebetween according to increase in the bonding temperature.

In view of this, in order to reduce the bonding temperature in the reactive air brazing method, various alloys have been developed for reducing the melting point of Ag brazing alloys. For example, an Ag-Ge-Si brazing alloy is disclosed in Patent Document 3.

Patent Document 1 is Japanese Patent Publication No. 4486820. Patent Document 2 is Japanese Unexamined Patent Application Publication No. 2010-531232. Patent Document 3 is Japanese Unexamined Patent Application Publication No. 2008-202097.

### DISCLOSURE OF THE INVENTION

However, the Ag-Ge-Si brazing alloy disclosed in Patent Document 3 is not melted at a temperature below the melting point of Ag, whereby the above problem that occurs in the reactive air brazing method cannot be solved. In addition, when a bonded article is made of a low melting brazing alloy, the high-temperature durability is deteriorated. For example, when the bonded article obtained by using the low-melting-point brazing alloy and bonding in the air at a heating temperature of 850 °C for 1 hour is subjected to a leak test after holding in the air at a heating temperature of 800 °C for 100 hours, leakage occurs at a bonded portion. In this case, it is assumed that the leakage is generated by volatilizing low-melting-point oxides.

Therefore, an object of the present invention is to provide a brazing alloy for bonding in air, which can be melted at a temperature below the melting point of Ag and in which the high-temperature durability of the bonded article can be improved. In addition, another object of the present invention is to provide a bonded article and a current collecting material that are bonded with the brazing alloy and which have the high-temperature durability.

The brazing alloy for bonding in air of the present invention, includes Ag (silver), Ge (germanium), B (boron), and Si (silicon), as essential components, in which total of constituent elements except for Ag is set to be more than 50% by volume and not more than 90% by volume, Si content in the constituent elements except for Ag is set to be more than 22% by volume, and B content in the constituent elements except for Ag is set to be more than 14% by volume.

The brazing alloy for bonding in air of the present invention is an Ag-B-Si brazing alloy containing Ag, B and Si as essential components. The component Ag is a material that is not easily oxidized even when melted in air. The component B is a low-melting-point material that is oxidized at not less than approximately 300 °C and that has oxides with a relatively low melting point (approximately 577 °C). In a case of using this brazing alloy for bonding members, the low melting point oxides are melted and are spread as liquids on a base material, whereby oxidation of the base material is prevented, even when the brazing is performed in air.

Since B of the low-melting-point material is included as an essential component, the brazing alloy is melted at a temperature not greater than the melting point (approximately 961 °C) ofAg. Thus, the bonding temperature is reduced and is lower than that in a case of using a conventional Ag brazing alloy for bonding in air. Therefore, when a metal member is used as a base material, oxidation of the base material is prevented, and deterioration of the metal member is prevented, since the bonding temperature is low. Moreover, when a metal member and a ceramic member are used as base materials, the thermal stress due to the difference in the thermal expansion coefficient therebetween is decreased, since the bonding temperature is low.

Furthermore, since the brazing alloy for bonding in air of the present invention contains Ag, B, and Si as essential components and the content of the constituent elements except for Ag is set to the above range, the high-temperature durability is improved. For example, the leakage does not occur at a bonded portion and superior gas sealing characteristics are maintained, even if the bonded article is subjected to the leak test after holding in air at a heating temperature of 800 °C for 100 hours. Therefore, long reliability can be ensured.

Accordingly, a bonded article having superior high-temperature durability in addition to preferable gas sealing characteristics and superior bonding strength is obtained by the brazing without using flux even in air.

The brazing alloy for bonding in air of the present invention may include various components. For example, at least one kind selected from the group consisting of Ge (germanium), Ti (titanium), Zr (zirconium), Hf (hafnium), Cr (chromium) and Al (aluminum) may be added as an additional component, and the content of the additional component in the constituent elements except for Ag is set to be not more than 64% by volume, may be used. In the case in which a ceramic member is used as a base material, reactivity with the ceramic member is improved by adding Ge, Ti, Zr and Hf. When Ge is used in a bonded article of, for example, a metal member and a ceramic member, Ge oxides are precipitated on the ceramic member. In this case, since Ge acts as an active metal, the wettability is improved. When Cr and Al are added, the oxygen is prevented from dispersing in the brazing alloy in brazing in the air or in holding at a high temperature, and as a result, oxidation resistance is improved.

In addition, when the brazing alloy for bonding in air of the present invention is used for bonding members, an oxide containing at least one kind of the constituent elements may be formed in brazing. Furthermore, when the brazing alloy for bonding in air of the present invention is used for bonding members, a complex oxide containing at least two kinds of the constituent elements may be formed in brazing.

The brazing alloy for bonding in air of the present invention has a melting point that is lower as described above and may have a melting point of, for example, not less than 650 °C and not more than 850 °C in air.

The present invention also provides a bonded article that is obtained by bonding with the brazing alloy of the present invention. That is, the bonded article of the present invention is formed of a set of a metal member and a metal member, a set of a ceramic member and a ceramic member, or a set of a metal member and a ceramic member, which are bonded with the brazing alloy of the present invention, and the bonded article has gas sealing characteristics. For example, the bonded article may be used in a fuel cell or in a solid oxide fuel cell.

The present invention further provides a current collecting material that is formed of a set of a metal member and a metal member, a set of a ceramic member and a ceramic member, or a set of a metal member and a ceramic member, which are bonded with the brazing alloy of the present invention. The current collecting material has electrical conductivity. For example, the current collecting material may be used for a fuel cell or a solid oxide fuel cell.

According to the brazing alloy of the present invention, the brazing alloy for bonding in air can be melted at a temperature below the melting point of Ag and the high-temperature durability of the bonded article can be improved. According to the bonded article and the current collecting material of the present invention, they are obtained by using the brazing alloy of the present invention and thereby have superior high-temperature durability in addition to preferable gas sealing characteristics and superior bonding strength.

### BRIEF DESCRIPTION OF DRAWINGS

Fig. 1 is a perspective view that shows an approximate structure of a bonded specimen formed in the Examples of the present invention.
Fig. 2 shows a bonded specimen for cross sectional observation used in the Examples of the present invention and shows a side cross sectional structure taken along a direction indicated by arrows 1A in Fig. 1.
Fig. 3 is an electron micrograph (500-times magnification) of a cross section of a bonded specimen of the Sample 4 of the present invention after bonding.
Fig. 4 is an electron micrograph (500-times magnification) of a cross section of a bonded specimen of the Sample 4 of the present invention after holding at a high temperature.
Fig. 5 is an electron micrograph (500-times magnification) of a cross section of a bonded specimen of the Comparative Sample 2 of the present invention after bonding.
Fig. 6 is an electron micrograph (500-times magnification) of a cross section of a bonded specimen of the Comparative Sample 2 of the present invention after holding at a high temperature.

### EXPLANATION OF REFERENCE NUMERALS

Reference numeral 10 denotes a bonded specimen, 11 denotes a metal member, 12 denotes a ceramic member, 13 denotes a bonded layer, 14 denotes Ag-rich portion, 15 denotes complex oxide, and 16 denotes a void.

### EXAMPLES

The present invention will be described with reference to examples hereinafter. In the Examples, bonded specimens were formed as Samples relating to the present invention by using a brazing alloy for bonding in air, which includes elements at amounts within the scope of the present invention. In addition, other bonded specimens were formed as Comparative Samples by using a brazing alloy for bonding in air, which includes elements in amounts outside the scope of the present invention. In order to evaluate the bonded specimens of the Samples of the present invention and the Comparative Samples, a leak test was performed on each of the specimens, and bonded portions of some of the specimens were observed.

### (1) Preparation of Samples of the Present Invention and Comparative Samples

The brazing alloys for bonding in air for forming the Samples of the present invention may be in the form of, for example, a paste in which a metal mixed powder is added to an organic solvent, an organic binder, or the like, an alloy powder paste, a foil, a sol-gel form, etc. The form of the brazing alloy is not particularly limited.

As the material of the metal member for forming the Samples of the present invention, for example, ferrite stainless steel, stainless steel, heat-resistant stainless steel, FeCrAl alloy, FeCrSi alloy, heat-resistant Ni based alloy, etc. may be used. The material of the metal member is not particularly limited. As the material of the ceramic member for forming the Samples of the present invention, for example, oxide ceramics such as yttria-stabilized zirconia, zirconia, alumina, magnesia, steatite, mullite, titania, silica, sialon, etc., may be used. The material of the ceramic member is not particularly limited.

A brazing alloy for bonding in air relating to each Sample of the present invention was used in a paste form by mixing a metal mixed powder with an organic binder. The metal mixed powder had a composition within the scope of the present invention, as shown in Table 1. With respect to the brazing alloy for bonding in air, in Sample 1, a brazing alloy for bonding in air (Ag-B-Si brazing alloy) of the present invention containing only essential components was used, in Samples 2 and 4, a brazing alloy for bonding in air (Ag-B-Si-Ge brazing alloy) of the present invention containing Ge as an additional component in addition to the essential components was used, and in Sample 3, a brazing alloy for bonding in air (Ag-B-Si-Ge-Cr brazing alloy) of the present invention containing Ge and Cr as additional components, in addition to the essential components, was used.

Here, in Table 1, total volume ratio of the constituent elements except for Ag refers to as content X, and for example, content of B in the content X is content of B in the constituent elements except for Ag. The values shown in Table 1 are volume ratios (unit: %).

As the metal member relating to each Sample of the present invention, a cylindrical member made of ZMG232L (manufactured by Hitachi Metals, Ltd.) of a ferrite alloy with an outer diameter of 14 mm and an inner diameter of 8 mm was used. As the ceramic member relating to each Sample of the present invention, a stabilized zirconia sheet made of yttria-stabilized zirconia (3YSZ) was used. The size of each sheet was 20 mm × 20 mm.

A brazing alloy for bonding in air relating to each Comparative Sample was used in a paste form by mixing a metal mixed powder with an organic binder. The metal mixed powder had a composition outside the scope of the present invention, as shown in Table 1. The same cylindrical member as for each Sample of the present invention was used for the metal member of each Comparative Sample. As shown in Table 1, a stabilized zirconia sheet was used for the ceramic member. With respect to the brazing alloy for bonding in air, in Comparative Sample 1, a brazing alloy for bonding in air in which the content X deviated from the range of the present invention (50% or less) was used, in Sample 2, a brazing alloy for bonding in air in which content of Si in the content X deviated from the range of the present invention (22% or less) was used, and in Sample 3, a brazing alloy for bonding in air in which content of B in the content X deviated from the range of the present invention (14% or less) was used.

In the Examples, the brazing alloy for bonding in air in the paste form was coated on an end surface of the metal member, and the ceramic member was placed on the coated surface. Then, the metal member and the ceramic member were bonded in air by heating at 850 °C for 1 hour. Thus, bonded specimens as Samples of the present invention and the Comparative Samples were formed.

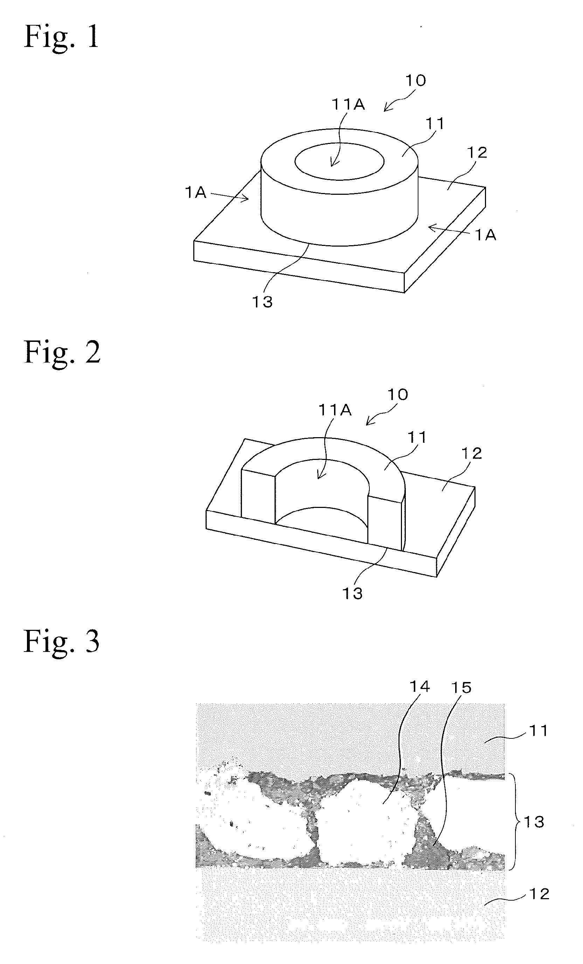

Fig. 1 is a schematic view that shows a structure of a bonded specimen 10. The reference numeral 11 denotes a metal member formed of a cylindrical member, the reference numeral 11A denotes an opening of the metal member, the reference numeral 12 denotes a ceramic member which is a sheet, and the reference numeral 13 denotes a bonded layer. Fig. 2 is a schematic view of a cross section of a bonded portion including the bonded layer 13 for observation (a perspective view that shows a side cross sectional structure taken along a direction indicated by the arrows 1A in Fig. 1).

**Table 1**

| | Composition of Brazing Alloy (volume ratio) | | | | | Content X (volume ratio) | B content in Content X | Si content in Content X | Ge content in Content X | Cr content in Content X | Leak Test Result | |
|---|---|---|---|---|---|---|---|---|---|---|---|---|
| | | | | | | | | | | | After Bonding | After Holding at High Temperature |
| | Ag | B | Si | Ge | Cr | | | | | | | |
| Sample 1 | 48 | 25 | 27 | - | - | 52 | 48 | 52 | 0 | 0 | No Leak | No Leak |
| Sample 2 | 46 | 25 | 27 | 2 | - | 54 | 46 | 50 | 4 | 0 | No Leak | No Leak |
| Sample 3 | 43 | 24 | 26 | 2 | 5 | 57 | 42 | 46 | 4 | 9 | No Leak | No Leak |
| Sample 4 | 47 | 13 | 28 | 12 | - | 53 | 25 | 53 | 23 | 0 | No Leak | No Leak |
| Comparative Sample 1 | 50 | 13 | 29 | 3 | 5 | 50 | 26 | 58 | 6 | 10 | No Leak | Leak |
| Comparative Sample 2 | 68 | 16 | 7 | 3 | 6 | 32 | 50 | 22 | 9 | 19 | No Leak | Leak |
| Comparative Sample 3 | 56 | 6 | 31 | 3 | 4 | 44 | 14 | 70 | 7 | 9 | Leak | Untested |

### (2) Evaluation of Samples of the Present Invention and Comparative Samples

First, the bonded specimen 10 after bonding was subjected to a helium leak test by sealing the opening 11A of the metal member 11 and evacuating the air inside the metal member 11. Next, the bonded specimen 10 was heated in the air at 800 °C for 100 hours. Then, the bonded specimen 10 after holding at high temperature was subjected to a helium leak test in the same manner as the above test. The results are shown in Table 1. The results of the helium leak test are shown in Table 1, in which "No leak" indicates that helium was not detected, and "Leak" indicates that helium was detected. When helium was detected in the helium leak test of the bonded specimen 10 after bonding, a helium leak test of the bonded specimen 10 after holding at high temperature was not carried out. In each of the Sample 4 of the present invention and the Comparative Sample 2, the bonded specimen 10 was cut at the center portion, and the bonded portion including the bonded layer 13 was observed.

With respect to results of the helium leak test, as shown in Table 1, in the Comparative Sample 1 using a brazing alloy for bonding in air in which the content X was deviated from the present invention and the Comparative Sample 2 using a brazing alloy for bonding in air in which the Si content in the content X deviated from the present invention, after holding at high temperature, helium was detected and the leakage occurred. In the Comparative Sample 3 using a brazing alloy for bonding in air in which the B content in the content X deviated from the present invention, after bonding, helium was detected and the leakage occurred.

In contrast, in the bonded specimens of Samples 1 to 4 using a brazing alloy for bonding in air in which the composition was in the range of the present invention, in both cases after bonding and after holding, helium was not detected and the leakage did not occur.

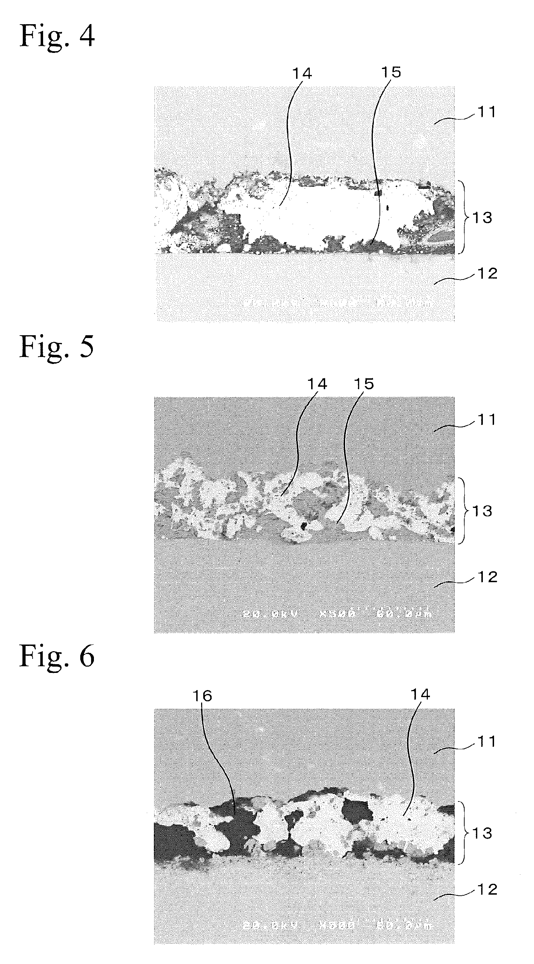

With respect to results of the cross sectional observation, in the Comparative Sample 2, after bonding in which the leak was not generated, the Ag-rich portion 14 and the complex oxide 15 were observed and void was not observed, as shown in Fig. 5. However, in the bonded specimen after holding at high temperature in which the leakage was generated, the complex oxide 15 was not observed and the void 16 was observed, as is apparent from Fig. 6. In contrast, in the bonded specimen of the Sample 4 after bonding and after holding at high temperature in which the leakage was not generated, the Ag-rich portion 14 and the complex oxide 15 were observed and void was not observed, as shown in Figs. 3 and 4.

As described above, in the Samples 1 to 4, the complex oxide existed and the void was not formed, even after holding at high temperature. Therefore, in the Samples 1 to 4, the brazing alloy for bonding in air was sufficiently melted by heating in air at 850 °C, and the bonded article formed of a set of a metal member and a ceramic member having preferable gas sealing characteristics and superior durability at high temperature was formed.

As is apparent from comparison of the Samples 1 to 4 and the Comparative Samples 1 to 3, it was necessary that the brazing alloy for bonding in air contain Ag, B, and Si as essential components and total content of constituent elements except for Ag be set to be more than 50% by volume and not more than 90% by volume, in order to have preferable gas sealing characteristics and superior high-temperature durability. In this case, as is apparent from the comparison of the Sample 1 and the Comparative Sample 2, it was necessary that Si content in the constituent elements except for Ag be set to be more than 22% by volume, and as is apparent from the comparison of the Sample 1 and the Comparative Sample 3, it was necessary that the B content in the constituent elements except for Ag be set to be more than 14% by volume.

In particular, as is apparent from the results of the Samples 2 to 4, it was preferable that when at least one kind selected from the group consisting of Ge, Cr, Al, Ti, Zr and Hf be further added as an additional component, the additional component content in the constituent elements except for Ag be set to less than 64% by volume.

## Claims

1. A brazing alloy for bonding in air, comprising Ag, B, and Si, as essential components,
wherein the total of constituent elements except for Ag is set to more than 50% by volume and not more than 90% by volume,
Si content in the constituent elements except for Ag is set to more than 22% by volume, and
B content in the constituent elements except for Ag is set to more than 14% by volume.

2. The brazing alloy for bonding in air according to claim 1, wherein at least one kind selected from the group consisting of Ge, Cr, Al, Ti, Zr, and Hf is further added as an additional component, and the additional component content in the constituent elements except for Ag is set to less than 64% by volume.

3. The brazing alloy for bonding in air according to claim 1 or 2, wherein when the brazing alloy is used for bonding of members, an oxide containing at least one kind of the constituent elements is formed in brazing.

4. The brazing alloy for bonding in air according to any one of claims 1 to 3, wherein when the brazing alloy is used for bonding of members, a complex oxide containing at least two kinds of the constituent elements is formed in brazing.

5. The brazing alloy for bonding in air according to any one of claims 1 to 4, wherein the brazing alloy has a melting point of not less than 650 °C and not more than 850 °C in air.

6. A bonded article formed of a set of a metal member and a metal member, a set of a ceramic member and a ceramic member, or a set of a metal member and a ceramic member, which are bonded with the brazing alloy recited in any one of claims 1 to 5, and the bonded article having gas sealing characteristics.

7. The bonded article according to claim 6, wherein the bonded article is used in a fuel cell or in a solid oxide fuel cell.

8. A current collecting material formed of a set of a metal member and a metal member, a set of a ceramic member and a ceramic member, or a set of a metal member and a ceramic member, which are bonded with the brazing alloy recited in any one of claims 1 to 5, and the current collecting material having electrical conductivity.

9. The current collecting material according to claim 8, wherein the current collecting material is used in a fuel cell or in a solid oxide fuel cell.
